# DEMANDE DE BREVET EUROPEEN

(11) **EP 3 712 717 A1**
(43) Date de publication de la demande: **23.09.2020**
(21) Numéro de dépôt: 19163887.3
(22) Date de dépôt: 19.03.2019
(51) Int. Cl.: G04B 39/00, G04B 45/00, B41M 5/26

(54) **METHODE POUR MARQUER UNE GLACE DE MONTRE EN SAPHIR**

(71) Demandeur: Comadur S.A., 2400 Le Locle (CH)
(72) Inventeur: NETUSCHILL, Alexandre, 2414 Le Cerneux-Péquignot (CH)
(74) Mandataire: ICB SA

(57) **Abrégé**

Méthode pour marquer une glace de montre (1) en saphir, par l'interaction entre un faisceau laser (4) et le saphir. Le faisceau est focalisé sur un point (5) à l'intérieur de la glace et l'interaction est telle qu'elle génère une zone opaque rectiligne (6,10) qui est parallèle à la surface supérieure (2) de la glace ou perpendiculaire à ladite surface (2). L'orientation de la zone opaque dépend du mode d'opération appliqué. Selon le mode d'opération par hachurage, le faisceau (4) est balayé selon un ou plusieurs trajets linéaires, générant des lignes opaques (6) à l'intérieur de la glace, qui sont parallèles à la surface supérieure. Le mode d'opération par perforation génère des zones opaques (10) distinctes, obtenues par une opération discontinue du faisceau (4) sur un nombre de points (5) juxtaposés. Selon ce dernier mode d'opération, les zones opaques (10) s'étendent dans la direction perpendiculaire à la surface supérieure de la glace.

## Description

### Domaine technique

La présente invention se rapporte à l'horlogerie, notamment au marquage d'une glace de montre pour ajouter à la glace un numéro de série, un dessin ou logo, ou tout autre type de marque de caractère informatique et/ou esthétique. L'invention est focalisée plus particulièrement sur le marquage d'une glace de montre en saphir.

### État de la technique

Une technique connue pour obtenir un marquage consiste à graver la glace à l'aide d'un laser. Sur des glaces en saphir, il est connu d'utiliser un laser qui est focalisé sur la surface supérieure de la glace, et de balayer le laser sur une partie de la surface, de manière à enlever de la matière, créant ainsi une cassure des mailles cristallines, rendant ainsi le matériau opaque. Le matériau enlevé doit être évacué sous la forme de poussière, ce qui représente un inconvénient de cette approche, puisque la poussière risque de contaminer le marquage.

Une autre technique de marquage de glaces de montre en saphir ou autres matériaux consiste au gravage du matériau par un laser focalisé à l'intérieur de la glace, mais effectué de manière pointillée. Le document WO-A-9921061 décrit une telle technique qui consiste en la création d'une série d'impacts du laser juxtaposés à l'intérieur du matériau, de manière à réaliser un motif. Les conditions de gravage sont telles que l'impact génère un défaut interne en forme d'étoile, ayant une section transversale non-contrôlable. Ceci impose une limite sur la distance minimum entre deux zones d'impact consécutives, limitant ainsi la visibilité de certains marquages ou dessins.

### Résumé de l'invention

La présente invention vise à fournir des méthodes pour réaliser des marquages dans une glace de montre en saphir qui ne souffrent pas des inconvénients identifiés ci-dessus. Ce but est atteint par une méthode et par une glace ainsi qu'une montre selon les revendications annexées.

L'invention concerne une méthode pour marquer une glace de montre en saphir, par l'interaction entre un faisceau laser et le saphir. Le faisceau est focalisé sur un point à l'intérieur de la glace et l'interaction est telle qu'elle génère une zone opaque rectiligne qui est parallèle à la surface supérieure de la glace ou perpendiculaire à ladite surface. L'orientation de la zone opaque dépend du mode d'opération appliqué. Selon le mode d'opération par hachurage, le faisceau est balayé selon un ou plusieurs trajets linéaires, générant des lignes opaques à l'intérieur de la glace, qui sont parallèles à la surface supérieure. Le mode d'opération par perforation génère des zones opaques distinctes, obtenues par une opération discontinue du faisceau sur un nombre de points juxtaposés. Selon ce dernier mode d'opération, les zones opaques s'étendent dans la direction perpendiculaire à la surface supérieure de la glace.

D'autres caractéristiques et avantages de la présente invention apparaîtront dans la description suivante de modes de réalisation préférés, présentés à titre d'exemple non limitatif en référence aux dessins annexés. Un nombre de plages de valeurs de paramètres est identifiée dans la description détaillée et dans les revendications. Les bornes de ces plages sont inclues dans les plages en question.

### Brève description des figures

La figure 1 représente deux coupes dans une glace en saphir selon l'invention, lors du marquage de la glace selon un premier mode d'opération, dit mode par hachurage, ainsi qu'un détail spécifique.
La figure 2 représente le marquage selon le premier mode d'opération, dans lequel deux étapes d'hachurages sont effectuées de manière croisée.
La figure 3 représente deux coupes dans une glace en saphir selon l'invention, lors du marquage de la glace selon un deuxième mode d'opération, dit mode par perforation.
La figure 4 représente un détail de la glace en saphir, marquée selon le mode de marquage par perforation.

### Description détaillée de formes d'exécution de l'invention

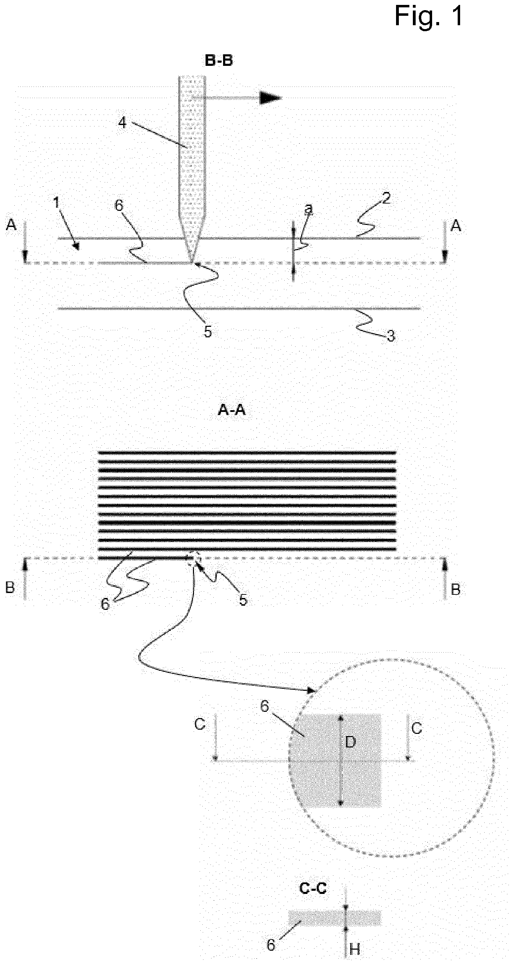

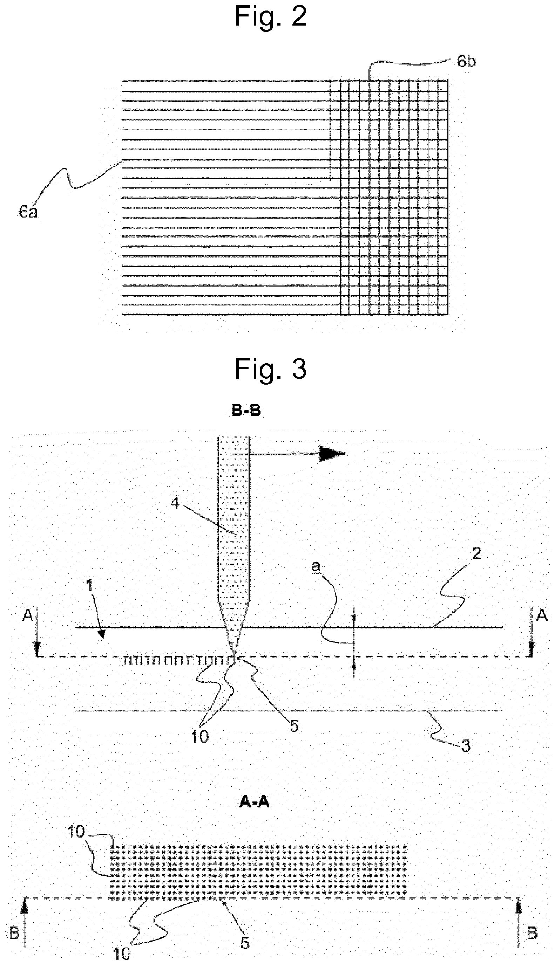

Dans les deux modes d'opération selon l'invention, illustrés respectivement aux figures 1 et 3, une glace de montre en saphir transparente 1 est marquée par un faisceau laser 4 orienté perpendiculairement à la surface supérieure 2, et focalisé sur un point 5 à l'intérieur de la glace.

Dans les exemples représentés mais non-limitatifs, la glace 1 a une surface supérieure 2 et une surface inférieure 3 qui sont essentiellement planes et parallèles l'une par rapport à l'autre. Selon le premier mode d'opération (figure 1), le faisceau 4 est balayé sur une partie de la surface de la glace 1, suivant un nombre de trajets linéaires juxtaposés, effectuant ainsi un marquage par hachurage. La distance 'a' entre le point focal 5 du laser et la surface supérieure 2 reste essentiellement fixe pendant le balayage. Les paramètres appliqués pour réaliser le hachurage sont tels que chaque balayage selon un trajet linéaire va générer une zone opaque 6 à l'intérieur du saphir, la zone étant essentiellement rectiligne et perpendiculaire à la direction du faisceau (ou parallèle à la surface supérieure de la glace). Le détail à la figure 1 montre que la zone opaque 6 est caractérisée par sa largeur D et sa hauteur H.

Selon une forme d'exécution préférée, ces dimensions sont contrôlables en fonction de la puissance du laser et du design à graver. La hauteur H est de l'ordre de grandeur du micromètre jusqu'à qq centaines de micromètre, par exemple jusqu'à 200 micromètres. Sans être lié par aucune théorie, on estime que chaque zone opaque est constituée d'une pluralité de microfissures qui s'étendent dans la direction du trajet de balayage.

Le paramètre principal qui permet d'obtenir les zones 6 rectilignes et parallèles à la surface supérieure 2 de la glace, est la vitesse de balayage. Cette vitesse est considérablement supérieure aux vitesses appliquées pour le gravage par enlèvement de matériau d'une glace en saphir.

De préférence, la vitesse de balayage selon l'invention se situe entre 2m/s et 3m/s, par exemple 2.5 m/s. En outre, il est nécessaire que le laser opère dans un régime applicable pour le gravage d'une glace de montre. Le tableau 1a donne des valeurs préférées pour les paramètres opérationnels du laser appliqués dans le premier mode d'opération :

**Tableau 1a**

| Type de laser | Laser à impulsions |
|---|---|
| Longueur des impulsions | 200 fs - 10 ps |
| Longueur d'onde | 500 nm - 1200 nm |
| Fréquence des impulsions | 200 kHz - 1.5 MHz |
| Energie du laser | 1 µJ - 20 µJ |

Le tableau 1b donne des valeurs préférées d'un nombre de paramètres géométriques appliqués dans le premier mode d'opération :

**Tableau 1b**

| | |
|---|---|
| Distance entre deux zones opaques 6 adjacentes (mesurée entre les lignes centrales des zones 6 | 10 µm - 20 µm |
| Profondeur du point focal 5 du laser (distance 'a' à la figure 1) | 0.5 mm - 1 mm |

Selon une forme d'exécution spécifique du premier mode d'opération, une deuxième étape d'hachurage est effectuée dans une direction transversale par rapport à la direction de la première étape. La figure 2 représente le résultat partiel de deux étapes d'hachurage croisées dans lequel les deux séries de lignes opaques 6a et 6b formées par les étapes respectives sont perpendiculaires les unes par rapport aux autres. La deuxième étape d'hachurage est effectuée avec le point focal 5 du laser localisé à la même profondeur 'a' que la première étape. De préférence, la distance entre deux lignes 6a ou 6b adjacentes est égale lors des deux étapes. L'angle entre la direction des lignes 6a et 6b se situe de préférence entre 30° et 90°.

Le mode d'opération par hachurage est utilisable pour créer une forme en trois dimensions, en effectuant le hachurage à plusieurs niveaux dans le matériau. Ce procédé commence par une première étape de hachurage (simple ou croisé), en focalisant le laser à une distance a₁ de la surface supérieure 2, suivi par une ou plusieurs étapes consécutives, à des distances a₂, a₃,... qui sont progressivement inférieure à la distance initiale a₁. De cette manière, une forme en 3D est obtenue qui comprend plusieurs couches. La distance entre deux couches est choisie de manière à éviter une superposition partielle de deux couches adjacentes.

Selon un deuxième mode d'opération, illustré à la figure 3, un faisceau laser 4 est focalisé consécutivement et chaque fois pendant un temps d'ouverture défini, sur une série de points 5 juxtaposés et localisés à l'intérieur d'une glace de montre en saphir 1, à une distance 'a' fixe à partir de la surface supérieure 2 de la glace. Cette méthode, dite 'mode d'opération par perforation', est donc similaire à la méthode décrite au document WO-A-99/21061. Néanmoins, les paramètres de la méthode sont configurés pour que les défauts générés par l'impact du laser soient différents par rapport aux méthodes antérieures.

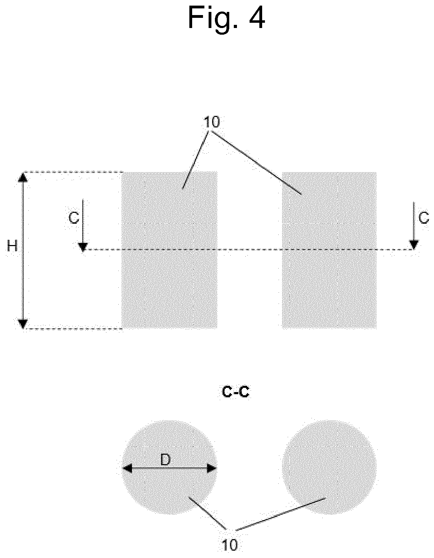

Selon la méthode de l'invention, l'interaction entre le laser et le saphir génère une zone opaque 10 rectiligne qui s'étend dans la direction du faisceau, i.e. perpendiculairement par rapport à la surface supérieure 2 de la glace 1. Comme représenté dans le détail à la figure 4, chaque zone 10 est définie par son diamètre D et par sa hauteur H. Ces dimensions sont contrôlables en fonction de la puissance du laser et en fonction du temps d'ouverture du laser appliqué pour chaque point. Le diamètre D est de préférence de l'ordre de grandeur du micromètre, par exemple entre 1 et 30 micromètres. La hauteur H peut par exemple se situer entre 1 et quelques centaines de micromètres. Comme pour le premier mode d'opération, et sans être lié à aucune théorie, il est estimé que chaque zone 10 est constituée d'une pluralité de microfissures qui s'étendent dans la direction du faisceau de laser 4. Contrairement aux défauts en forme d'étoiles décrits dans le document WO-A-99/21061, les zones 10 représentent une forme bien définie par les dimensions D et H, qui sont de plus contrôlables par les paramètres du laser. Ceci permet un contrôle plus efficace de la distance entre deux points d'impact, ainsi que de l'épaisseur d'un marquage.

Le tableau 2a regroupe les paramètres du laser applicables de préférence pour atteindre un marquage selon ce deuxième mode d'opération.

**Tableau 2a**

| Type de laser | Laser à impulsions |
|---|---|
| Longueur des impulsions | 200 fs - 10 ps |
| Longueur d'onde | 500 nm - 1200 nm |
| Fréquence des impulsions | 200 kHz - 1.5 MHz |
| Energie du laser | 1 µJ - 20 µJ |
| Temps d'ouverture du laser | 0.01 ms - 0.1 ms |

Le tableau 2b donne des valeurs préférées d'un nombre de paramètres géométriques appliqués dans le deuxième mode d'opération :

**Tableau 2b**

| | |
|---|---|
| Distance entre deux zones 10 adjacentes (mesurée entre les centres de deux zones | 0.01 mm - 0.03 mm |
| Profondeur du point focal du laser (distance 'a' à la figure 3) | 0.5 mm - 1 mm |

De manière analogue au premier mode d'opération, un marquage en 3 dimensions peut être obtenu en effectuant le marquage à perforation à plusieurs niveaux dans l'épaisseur de la glace 1. Ce procédé commence par une première étape de perforation, en focalisant le laser à une distance a₁ de la surface supérieure 2, suivie par une ou plusieurs étapes consécutives, à des distances a₂,a₃,... qui sont progressivement inférieures à la distance initiale a₁. De cette manière, une forme en 3D est obtenue qui est constituée de plusieurs couches. La distance entre deux couches est choisie de manière à éviter une superposition partielle de deux couches adjacentes.

La méthode selon l'invention fonctionne aussi quand une couche antireflet, par exemple une couche en MgF₂ ou en SiO₂, est présente sur la surface supérieure 2 de la glace.

L'invention concerne également une glace de montre en saphir marquée par l'une quelconque des méthodes décrites ci-dessus, ainsi qu'une montre pourvue de cette glace.

## Revendications

1. Méthode pour marquer une glace de montre en saphir (1), la glace ayant une surface supérieure plane (2) et une surface inférieure (3), utilisant un faisceau laser (4) dirigé perpendiculairement par rapport à la surface supérieure (2), et focalisé en un point (5) à l'intérieur de la matière de la glace (1), **caractérisée en ce que** l'interaction entre le laser et le saphir au niveau du point focal (5) génère au moins une zone opaque rectiligne (6,10) qui s'étend dans une direction parallèle à la surface supérieure (2) ou dans une direction perpendiculaire à ladite surface supérieure (2).

2. La méthode selon la revendication 1, dans laquelle le faisceau (4) est balayé par rapport à la glace (1), suivant un trajet linéaire, tout en restant focalisé sur un point (5) à une distance fixe par rapport à la surface supérieure (2) de la glace, et dans laquelle ladite zone opaque rectiligne (6) est essentiellement parallèle à la surface supérieure (2) de la glace (1).

3. La méthode selon la revendication 2, dans laquelle le faisceau (4) suit une pluralité de trajets juxtaposés, de manière à marquer une première portion de la glace par une première étape d'hachurage.

4. La méthode selon la revendication 3, dans laquelle une deuxième étape d'hachurage est effectuée en direction transversale par rapport à la première étape, la deuxième étape étant effectuée sur une deuxième portion de la glace qui recouvre au moins partiellement la première portion, la deuxième étape d'hachurage étant effectuée à la même distance par rapport à la surface supérieure (2) que la première étape d'hachurage.

5. La méthode selon l'une quelconque des revendications 3 ou 4, dans laquelle plusieurs opérations d'hachurage, comprenant une ou deux étapes, sont effectuées à des niveaux successifs dans la matière, de manière à obtenir un marquage à 3 dimensions, et dans laquelle les zones opaques rectilignes (6) formées à deux niveaux adjacents sont séparées les unes des autres.

6. La méthode selon l'une quelconque des revendications 2 à 5, dans laquelle la vitesse de balayage se situe entre 2 m/s et 3 m/s.

7. La méthode selon l'une quelconque des revendications 2 à 6, dans laquelle un nombre de paramètres du laser sont définis comme suit :
| Type de laser | Laser à impulsions |
|---|---|
| Longueur des impulsions | 200 fs - 10 ps |
| Longueur d'onde | 500 nm - 1200 nm |
| Fréquence des impulsions | 200 kHz - 1.5 MHz |
| Energie du laser | 1 µJ - 20 µJ |

8. La méthode selon l'une quelconque des revendications 2 à 7, dans laquelle un nombre de paramètres géométriques sont définis comme suit :
| | |
|---|---|
| Distance entre deux zones opaques linéaires adjacentes | 10 µm - 20 µm |
| Profondeur du point focal du laser | 0.5 mm - 1 mm |

9. La méthode selon la revendication 1, dans laquelle le faisceau laser (4) est focalisé consécutivement en une pluralité de points juxtaposés (5), et situés à la même distance de la surface supérieure (2), et dans laquelle la zone opaque rectiligne (10) est générée au niveau de chacun des points, lesdites zones s'étendant dans la direction perpendiculaire à la surface supérieure (2).

10. La méthode selon la revendication 9, dans laquelle plusieurs étapes de marquage sont effectuées à des niveaux successifs dans la matière, de manière à obtenir un marquage à 3 dimensions, et dans laquelle les zones opaques rectilignes (10) formées à deux niveaux adjacents sont séparées les unes des autres.

11. La méthode selon l'une quelconque des revendications 9 et 10, dans laquelle les valeurs d'un nombre de paramètres du laser sont définies comme suit :
| Type de laser | Laser à impulsions |
|---|---|
| Longueur des impulsions | 200 fs - 10 ps |
| Longueur d'onde | 500 nm - 1200 nm |
| Fréquence des impulsions | 200 kHz - 1.5 MHz |
| Energie du laser | 1 µJ - 20 µJ |
| Temps d'ouverture du laser | 0.01 ms - 0.1 ms |

12. La méthode selon l'une quelconque des revendications 9 à 11, dans laquelle un nombre de paramètres géométriques sont définis comme suit :
| | |
|---|---|
| Distance entre deux points adjacents | 0.01 mm - 0.03 mm |
| Profondeur du point focal du laser (distance 'a' à la figure 3) | 0.5 mm - 1 mm |

13. La méthode selon l'une quelconque des revendications précédentes, dans laquelle la surface supérieure (2) de la glace est pourvue d'une couche antireflet.

14. Glace de montre (1) en saphir pourvue d'un marquage à l'intérieur de la glace, la glace ayant une surface supérieure plane (2) et une surface inférieure (3), dans laquelle le marquage comprend au moins une zone opaque rectiligne (6,10) qui s'étend dans une direction parallèle à la surface supérieure (2) ou dans une direction perpendiculaire à ladite surface supérieure (2).

15. Glace de montre (1) selon la revendication 14, dans laquelle le marquage comprend une ou plusieurs zones opaques rectilignes (6) juxtaposées, orientées dans une direction parallèle à la surface supérieure (2), et à une distance fixe de ladite surface supérieure (2).

16. Glace de montre (1) selon la revendication 15, dans laquelle le marquage comprend deux séries de zones opaques rectilignes juxtaposées (6a,6b), à la même distance de la surface supérieure (2), orientées transversalement l'une par rapport à l'autre et dans laquelle la deuxième série recouvre au moins partiellement la première série.

17. Glace de montre (1) selon la revendication 14, dans laquelle le marquage comporte de manière pointillée une pluralité de zones opaques rectilignes juxtaposés (10) qui s'étendent dans la direction perpendiculaire à la surface supérieure (2) de la glace (1).

18. Glace de montre (1) comprenant un marquage en 3 dimensions, comprenant plusieurs couches, dans laquelle chaque couche est constituée d'un marquage selon la revendication 15 ou selon l'une quelconque des revendications 16 et 17.

19. Montre comprenant une glace (1) en saphir selon l'une quelconque des revendications 14 à 18.
